# EUROPÄISCHE PATENTSCHRIFT

(11) **EP 3 980 158 B1**
(45) Veröffentlichungstag und Bekanntmachung des Hinweises auf die Patenterteilung: **04.10.2023**
(21) Anmeldenummer: 20725170.3
(22) Anmeldetag: 11.05.2020
(51) Int. Cl.: B01D 46/10, B01D 46/52

(54) **FILTERELEMENT UND FILTERSYSTEM**
FILTER ELEMENT AND FILTER SYSTEM
ÉLÉMENT FILTRANT ET SYSTÈME DE FILTRE

(30) Priorität: 07.06.2019 DE 102019115568
(43) Veröffentlichungstag der Anmeldung: 13.04.2022
(73) Patentinhaber: MANN+HUMMEL GmbH, 71636 Ludwigsburg (DE)
(72) Erfinder: KAUFMANN, Michael, 67149 Meckenheim (DE); RUHLAND, Klaus-Dieter, 67149 Meckenheim (DE); WAGNER, Markus, 94424 Arnstorf (DE); HETTKAMP, Philipp, 71711 Steinheim (DE)
(74) Vertreter: Mann + Hummel Intellectual Property
(86) Internationale Anmeldenummer: PCT/EP2020/063013
(87) Internationale Veröffentlichungsnummer: WO 2020/244888

(56) Entgegenhaltungen:
- EP-A1- 0 867 216
- DE-A1-102010 025 971
- DE-A1-102010 032 295
- DE-A1-102015 011 339
- DE-A1-102017 221 592

## Beschreibung

### Technisches Gebiet

Die Erfindung betrifft ein Filterelement zum Filtern eines Fluids, insbesondere zur Verwendung als Luftfilter einer Brennkraftmaschine oder als Innenraumluftfilter, insbesondere eines Kraftfahrzeugs sowie ein Filtersystem mit einem Filterelement.

### Stand der Technik

Aus der DE 10 2010 032295 A1 ist ein Filterelement und Verfahren zu dessen Herstellung und aus der DE 10 2017 221592 A1 ein Plattenfilterelement für eine Luftfiltereinrichtung bekannt. Die WO 2017/133796 A1 offenbart ein Filterelement eines Filters für insbesondere gasförmiges Fluid, insbesondere Luft, insbesondere einer Brennkraftmaschine, insbesondere eines Kraftfahrzeugs und/oder einer Maschine. Das Filterelement kann in einer Einbaurichtung, die parallel oder koaxial zu einer Einbauachse verläuft, in ein Filtergehäuse des Filters eingebaut werden. Das Filterelement weist wenigstens einen Filterbalg mit wenigstens einem Filtermedium auf. Der Filterbalg weist auf bezüglich einer Elementachse, welche senkrecht oder quer zur Einbauachse verläuft, axial gegenüberliegenden Seiten jeweils eine Durchströmseite für das Fluid auf. Das Filterelement weist wenigstens eine Dichtung auf, welche bezüglich der Elementachse umfangsmäßig wenigstens teilweise zusammenhängend wenigstens abschnittsweise an einer bezüglich der Elementachse radial äußeren Umfangsseite des Filterelements angeordnet ist.

### Offenbarung der Erfindung

Eine Aufgabe der Erfindung ist es, ein verbessertes Filterelement zum Filtern eines Fluids zu schaffen, das eine hohe Standzeit bei hoher Zuverlässigkeit im Betrieb aufweist.

Eine weitere Aufgabe ist es, ein Filtersystem zum Filtern eines Fluids zur Aufnahme eines solchen austauschbaren Filterelements zu schaffen.

Die vorgenannte Aufgabe wird nach einem Aspekt der Erfindung gelöst von einem Filterelement zum Filtern eines Fluids, insbesondere Luft, mit wenigstens einem Filterbalg mit einem zickzackförmig gefalteten Filtermedium, mit einer rohseitigen Anströmfläche und einer reinseitigen Abströmfläche, wobei der Filterbalg in einem Rahmen, insbesondere einem Verstärkungsrahmen angeordnet und bevorzugt mit diesem verbunden ist, insbesondere an der rohseitigen Anströmfläche und/oder an der reinseitigen Abströmfläche mit dem Rahmen verbunden ist, mit wenigstens einer Dichtung, welche umfangsmäßig wenigstens teilweise zusammenhängend wenigstens abschnittsweise an einer äußeren Umfangsseite des Filtermediums auf der Anströmfläche oder auf der Abströmfläche des Filterbalgs angeordnet ist und welche mittels als wenigstens teilweise umfangmäßig umlaufender Verzahnungsrippen ausgeführten Formschlusselementen des Verstärkungsrahmens mit dem Verstärkungsrahmen durch Angießen, Anschäumen oder Anspritzen mit dem Verstärkungsrahmen verbunden ist, wobei auf der Anströmfläche und/oder auf der Abströmfläche des Filterbalgs eine Mehrzahl von länglichen Klebstoffabschnitten entlang von mindestens zwei Klebstoffspuren auf dem Filtermedium angeordnet sind, dadurch gekennzeichnet, dass das Filterelement zugentlastende Mittel zur Kompensation einer Längenänderung der Klebstoffspuren gegenüber dem Filtermedium und/oder der Dichtung aufweist. Der verwendete Klebstoff ist in der Regel und bevorzugt ein thermoplastischer Schmelzklebstoff aus Polyamid oder Polyester, der mittels Auftragsdüsen in plastifiziertem Zustand aufgetragen wird und beim Abkühlen aushärtet. In ausgehärtetem Zustand ist der Klebstoffabschnitt dann in anderen Worten ein raupenförmiger Kunststoffabschnitt.

Die weitere Aufgabe wird nach einem weiteren Aspekt der Erfindung gelöst von einem Filtersystem zum Filtern eines Fluids mit einem Filtergehäuse, welches wenigstens einen Einlass zum Einströmen des Fluidstroms und wenigstens einen Auslass zum Ausströmen des gereinigten Fluidstroms aufweist, und mit einem in dem Filtergehäuse zwischen einer Rohseite und einer Reinseite austauschbar angeordneten Filterelement zum Filtern des Fluids, mit wenigstens einem Filterbalg mit einem zickzackförmig gefalteten Filtermedium, mit einer rohseitigen Anströmfläche und einer reinseitigen Abströmfläche, welcher Filterbalg in einem reinseitig angeordneten Verstärkungsrahmen angeordnet ist, mit wenigstens einer Dichtung, welche umfangsmäßig wenigstens teilweise zusammenhängend wenigstens abschnittsweise an einer äußeren Umfangsseite des Filtermediums auf der Anströmfläche oder auf der Abströmfläche des Filterbalgs angeordnet ist und welche mittels wenigstens teilweise umfangmäßig umlaufender Verzahnungsrippen mit dem Verstärkungsrahmen verbunden, insbesondere durch Anschäumen oder Anspritzen mit dem Verstärkungsrahmen verbunden ist, wobei auf der Anströmfläche und/oder auf der Abströmfläche des Filterbalgs eine Mehrzahl von länglichen Klebstoffabschnitten entlang von mindestens zwei Klebstoffspuren auf dem Filtermedium angeordnet sind, dadurch gekennzeichnet, dass das Filterelement zugentlastende Mittel zur Kompensation einer Längenänderung der Klebstoffspuren gegenüber dem Filtermedium und/oder der Dichtung aufweist.

Günstige Ausgestaltungen und Vorteile der Erfindung ergeben sich aus den weiteren Ansprüchen, der Beschreibung und der Zeichnung.

Es wird ein Filterelement zum Filtern eines Fluids, insbesondere Luft, vorgeschlagen, mit wenigstens einem Filterbalg mit einem zickzackförmig gefalteten Filtermedium, mit einer rohseitigen Anströmfläche und einer reinseitigen Abströmfläche, wobei der Filterbalg in einem Verstärkungsrahmen angeordnet ist, und mit wenigstens einer Dichtung, welche umfangsmäßig wenigstens teilweise zusammenhängend wenigstens abschnittsweise an einer äußeren Umfangsseite des Filtermediums auf der Anströmfläche oder auf der Abströmfläche des Filterbalgs angeordnet ist und welche beispielsweise mittels wenigstens teilweise umfangmäßig umlaufender Verzahnungsrippen mit dem Verstärkungsrahmen verbunden, insbesondere durch Anschäumen oder Anspritzen mit dem Verstärkungsrahmen verbunden ist. Dabei sind auf der Anströmfläche und/oder auf der Abströmfläche des Filterbalgs eine Mehrzahl von länglichen Klebstoffabschnitten entlang von mindestens zwei Klebstoffspuren auf dem Filtermedium angeordnet.

Erfindungsgemäß weist das Filterelement zugentlastende Mittel zur Kompensation einer Längenänderung der Klebstoffspuren gegenüber dem Filtermedium und/oder der Dichtung auf.

Der Filterbalg kann beispielsweise zickzackförmig zu Falten gefaltet sein, mit parallelen, in einer Längserstreckung des Filterbalgs aufeinander folgenden Faltkanten, die sich jeweils zwischen gegenüberliegenden Stirnkanten des Filterbalgs erstrecken. Dabei kann der Filterbalg umlaufend mit einem durchgehenden Verstärkungsrahmen umspritzt sein. Ein solcher Filterbalg ist vorteilhaft als Luftfilter, beispielsweise einer Brennkraftmaschine, einzusetzen und stellt eine kostengünstige und effiziente Lösung eines Luftfilters dar. Durch den angespritzten Rahmen lässt sich der Filterbalg einfach montieren und im Bedarfsfall auch austauschen.

Die Dichtung kann bevorzugt eine Polyurethan (PUR)-Dichtung sein, welche durch Anschäumen oder Anspritzen an den Filterbalg im Bereich des Verstärkungsrahmens hergestellt werden kann.

Die Durchströmungsrichtung ist bei einem flachen Filter beispielsweise senkrecht zur Anströmfläche und Abströmfläche, die bei einem flachen Filter an gegenüberliegenden Flachseiten des Filterbalgs vorgesehen sind, gerichtet. Vorzugsweise bilden die Abströmfläche und die Anströmfläche bei einem Filter mit aufgestellten Falten die Flächen, in denen jeweils die Faltkanten von Falten des Filtermediums liegen.

Eine der Durchströmseiten des Filterbalgs kann eine Anströmfläche für das Fluid, die andere Durchströmseite eine Abströmfläche realisieren. Das Fluid durchströmt den Filterbalg von der Anströmfläche zur Abströmfläche. Die Durchströmseiten können jeweils als Durchströmfläche realisiert sein, wobei bei einem gefalteten Filterbalg die jeweiligen Faltkanten die entsprechende Durchströmfläche aufspannen.

Gemäß dem Stand der Technik sind üblicherweise stirnseitig angeordnete Klebstoffabschnitte als über die Anströmfläche oder Abströmfläche durchgehende Klebstoffspuren auf den und quer zu den Faltkanten der Falten des Filtermediums angeordnet. Dadurch sind die Faltkanten jeweils zueinander eindeutig in einem festen Abstand positioniert. Die Klebstoffspuren werden entweder auf eine durch nebeneinanderliegende Faltkanten gebildete An- oder Abströmfläche, oder quer zu den Faltkanten auf das ungefaltete Papier appliziert, bei welchem anschließend bei noch plastifiziertem Klebstoff die Falten aufgestellt werden, wobei sich im Bereich der Faltkanten auf der An- oder Abströmseite die Klebstoffabschnitte nebeneinanderliegender Falten miteinander verbinden, so dass auf der An- und/oder Abströmfläche eine quer zu den Faltkanten verlaufende, durchgehende, relativ zugfeste Verbindung entsteht. In beiden Fällen entsteht eine quer zu den Falten verlaufende, durchgehende, im ausgehärteten Zustand feste Raupe. Durch die erfindungsgemäßen zugentlastenden Mittel kann vorteilhaft vermieden werden, dass die Klebstoffspuren durch Schrumpfen des Klebstoffs im Lauf der Zeit Zugspannungen quer zu den Faltkanten auf den Filterbalg erzeugen. Der Vorteil der zugentlastenden Mittel besteht darin, dass durch das Schrumpfen des Klebstoffs entstehende Verformungen reduziert oder vermieden werden. Derartige Verformungen könnten beispielsweise in Positionsänderungen von Funktionselementen wie Dichtflächen resultieren oder im Extremfall zur Beschädigung führen. Durch die zugentlastenden Mittel kann die Schrumpfung des Klebstoffs dennoch stattfinden, ohne dass es zu nachteiligen Spannungsauswirkungen in diesen Bereichen kommt.

Vorteilhafterweise kann das Filterelement ein so genanntes Flachfilterelement sein. Bei einem Flachfilterelement im Sinne der Erfindung ist das Filtermedium nicht zu einem Hohlkörper geschlossen.

Das erfindungsgemäße Filterelement ist nicht ringförmig. Die Durchströmseiten liegen sich bezüglich einer Elementachse axial gegenüber. Im Unterschied dazu ist bei einem Hohlfilterelement, insbesondere einem so genannten Rundfilterelement, das Filtermedium umfangsmäßig geschlossen und umgibt einen Innenraum. Das erfindungsgemäße Filterelement kann eben oder gebogen sein. Dabei kann eine Anströmfläche und/oder eine Abströmfläche des Filterbalges für das Fluid eben, gebogen oder abgestuft sein. Das Filterelement kann auch kastenförmig sein. Der Filterbalg kann etwa die Form eines Polyeders aufweisen. Vorteilhafterweise kann der Filterbalg würfelförmig, quaderförmig, pyramidal, prismatisch, keilartig oder dergleichen sein. Dabei ist es nicht erforderlich, dass alle Seiten, insbesondere Umfangsseiten, des Filterbalges eben sind. Wenigstens eine Seite des Filterbalges kann auch wenigstens zum Teil gebogen, insbesondere parabolisch, und/oder gestuft verlaufen. Gegenüberliegende Seiten können parallel verlaufen. Alternativ oder zusätzlich können sie auch schräg oder in anderer Weise nicht parallel zueinander verlaufen. Vorteilhafterweise können die Anströmfläche und/oder die Abströmfläche jeweils wenigstens abschnittsweise senkrecht oder schräg zur Elementachse verlaufen.

Vorteilhafterweise können die Anströmfläche und die Abströmfläche wenigstens abschnittsweise schräg zueinander und/oder wenigstens abschnittsweise parallel zueinander verlaufen. Vorteilhafterweise kann wenigstens ein Filterbalg ein zickzackartig und/oder wellenartig geformtes Filtermedium aufweisen. Auf diese Weise kann die von dem Fluid zu durchströmende Oberfläche des Filtermediums im Verhältnis zur Raumausdehnung des Filterbalgs vergrößert werden.

Vorteilhafterweise können Faltkanten des Filtermediums auf den gegenüberliegenden Durchströmseiten, insbesondere auf einer Anströmfläche und/oder einer Abströmfläche, parallel verlaufen.

Vorteilhafterweise kann wenigstens ein Filterbalg verhältnismäßig tiefe Falten und/oder variable Faltenhöhen aufweisen. Als Faltenhöhe wird die Ausdehnung einer Falte des gefalteten Filtermediums zwischen einer einströmseitigen Faltkante und einer benachbarten ausströmseitigen Faltkante bezeichnet. Bei tiefen Falten ist die Faltenhöhe, also die Höhe des Filterbalgs im Bereich der entsprechenden Falte, größer als eine Breite und/oder eine Länge des Filterbalgs senkrecht oder quer zur Faltenhöhe.

Das Filtermedium kann Filterpapier, Filtervlies, Meltblown, Gewebe und/oder andersartiges zur Filtrierung von Fluid, insbesondere Luft, geeignetes Filtermaterial aufweisen. Vorteilhafterweise kann das Filtermedium flexibel, insbesondere faltbar oder biegbar, sein.

Der Filterbalg kann alternativ oder zusätzlich fluiddurchlässigen, insbesondere luftdurchlässigen, Filterschaum aufweisen.

Der Filterbalg kann wenigstens teilweise als massiver Block aus Filtermaterial, insbesondere Filterschaum, realisiert sein.

Gemäß einer vorteilhaften Ausgestaltung kann als zugentlastendes Mittel auf jeder Klebstoffspur wenigstens ein Klebstoffabschnitt und wenigstens eine Klebstoffunterbrechung angeordnet sein, wobei insbesondere die Klebstoffunterbrechungen benachbarter Klebstoffspuren insbesondere bezüglich einer Querrichtung zu den Falten auf unterschiedlichen Faltkanten angeordnet sein können. Durchgehende Klebstoffspuren werden so in einzelne voneinander abgesetzte Klebstoffabschnitte unterteilt. Diese Klebstoffunterbrechungen können zweckmäßigerweise bei der Herstellung der Klebstoffspuren durch Unterbrechen des Klebstoffstroms eingebracht werden. Bevorzugt können die Klebstoffunterbrechungen auf den Faltkanten angeordnet sein.

Gemäß einer vorteilhaften Ausgestaltung können die Klebstoffunterbrechungen benachbarter Klebstoffspuren ohne Überlappung bezüglich einer Querrichtung zu den Falten angeordnet sein. Nebeneinanderliegende Klebstoffspuren weisen in anderen Worten bevorzugt keine auf der gleichen Faltkante angeordnete Klebstoffunterbrechung auf. Sind die Klebstoffunterbrechungen so versetzt gegeneinander auf der Anströmfläche oder Abströmfläche angeordnet, wird die Gesamtsteifigkeit des Filterbalgs günstigerweise relativ wenig beeinträchtigt, sodass der Filterbalg auch gegenüber höheren Fluiddrücken stabil bleibt.

Gemäß einer vorteilhaften Ausgestaltung können sich die ununterbrochenen Klebstoffabschnitte über mindestens fünfmal, bevorzugt über mindestens zehnmal, besonders bevorzugt über mindestens fünfzehnmal, mehr Falten erstrecken als die Klebstoffunterbrechungen. Eine solche Bemessung der Klebstoffabschnitte im Vergleich zu den Klebstoffunterbrechungen gewährleistet im praktischen Betrieb eine ausreichende Stabilität des Filterbalgs bei gleichzeitig ausreichender Zugentlastung.

Gemäß einer vorteilhaften Ausgestaltung können sich die Klebstoffunterbrechungen über mindestens oder genau eine Faltkante hinweg erstrecken, bevorzugt über mindestens oder genau zwei nebeneinanderliegende Faltkanten hinweg erstrecken. Bevorzugt schließen sich beidseitig mehrerer oder aller Klebstoffunterbrechungen jeweils ununterbrochene Klebstoffabschnitte an, die sich über mindestens fünf Faltkanten oder mindestens über fünfmal, bevorzugt über mindestens zehnmal, besonders bevorzugt über mindestens fünfzehnmal, mehr Faltkanten erstrecken als die Klebstoffunterbrechungen, sofern sie nicht mit der letzten Falte des Filterbalges enden. Auch auf diese Weise kann eine ausreichende Stabilität des Filterbalgs gegenüber höheren Fluiddrücken durch die Durchströmung des Filtermediums gewährleistet werden.

Gemäß einer vorteilhaften Ausgestaltung können die Klebstoffspuren parallel zueinander äquidistant angeordnet sein und/oder wobei die Klebstoffunterbrechungen über die Anströmfläche und/oder über die Abströmfläche gleichmäßig verteilt angeordnet sein können. Eine solche Anordnung der Klebstoffspuren und Bemessung der Klebstoffabschnitte im Vergleich zu den Klebstoffunterbrechungen gewährleistet im praktischen Betrieb bei Durchströmung des Filtermediums durch das Fluid eine ausreichende Stabilität des Filterbalgs bei gleichzeitig ausreichender Zugentlastung.

Gemäß einer vorteilhaften Ausgestaltung können die Klebstoffspuren senkrecht zu den Faltkanten verlaufen. Dadurch kann eine günstige Stabilität des Filtermediums gegenüber höheren Fluiddrücken auch bei zunehmender Belastung des Filtermediums durch angelagerte aus dem Fluid herausgefilterte Schmutzpartikel erreicht werden.

Gemäß der Erfindung ist als zugentlastendes Mittel auf wenigstens einer Längsseite und/oder einer Querseite des Verstärkungsrahmens, welche Längsseite und/oder Querseite schräg oder senkrecht zu den Klebstoffspuren ausgerichtet ist, ein Schiebesitz der Dichtung vorgesehen sein. Durch einen solchen Schiebesitz der Dichtung kann erreicht werden, dass die Dichtung sich mit der Bewegung des Filterbalgs durch Schrumpfen der Klebstoffspuren mitbewegen kann und keine ungewollten Klebstofföffnungen zwischen Filtermedium und Dichtung zu Leckagen für das zu filternde Fluid entstehen. Die Dichtigkeit zwischen dem Filtermedium und der Dichtung kann so über die Standzeit des Filterelements gewährleistet werden. Ein solcher Schiebesitz der Dichtung ist bevorzugt an mindestens einer zu den Faltkanten parallelen Seite, besonders bevorzugt an zwei zu den Faltkanten parallelen Seiten des Verstärkungsrahmens angeordnet.

Gemäß einer vorteilhaften Ausgestaltung kann der Verstärkungsrahmen Formschlussmittel wie eine Mehrzahl von Öffnungen oder Rippen, beispielsweise Verzahnungsrippen oder Ähnliches aufweisen. Bevorzugt kann wenigstens eine Längsseite oder eine Querseite des Verstärkungsrahmens formschlussmittellos bzw. verzahnungsrippenlos ausgebildet sein. Die Dichtung ist bevorzugt dichtend mit dem Filterbalg und/oder dem den Filterbalg umgebenden Verstärkungsrahmen verbunden, bevorzugt an diese angeformt, beispielsweise angeschäumt oder angespritzt und weiter bevorzugt über mit umformte, umschäumte oder umspritzte Formschlussmittel wie beispielsweise Verzahnungsrippen mit dem Verstärkungsrahmen fest verbunden. Ein Schiebesitz der Dichtung wird erfindungsgemäß erreicht, indem an wenigstens einer Längsseite oder Querseite des Verstärkungsrahmens diese Verzahnungsrippen weggelassen werden, sodass die Dichtung nur auf der glatten Frontseite des Verstärkungsrahmens aufliegt und sich so leicht bewegen kann.

Gemäß einer vorteilhaften Ausgestaltung kann die Dichtung auf der Längsseite oder der Querseite verschieblich angeordnet sein. Durch das Fehlen von Formschlusselementen wie Verzahnungsrippen ist die Dichtung mit dem Verstärkungsrahmen an diesen Seiten nur leicht, insbesondere in Richtung quer zu den Faltkanten nicht formschlüssig verbunden und nicht verzahnt und kann sich so bei Bewegungen des Filterbalgs durch Schrumpfen der Klebstoffspuren mit dem Filterbalg mitbewegen. Dadurch können ungewollte Klebstofföffnungen zwischen Filtermedium und Dichtung, welche zu Leckagen für das zu filternde Fluid führen können, vermieden werden.

Nach einem weiteren Aspekt betrifft die Erfindung ein Filtersystem zum Filtern eines Fluids mit einem Filtergehäuse, welches wenigstens einen Einlass zum Einströmen des Fluidstroms und wenigstens einen Auslass zum Ausströmen des gereinigten Fluidstroms aufweist, und mit einem in dem Filtergehäuse zwischen einer Rohseite und einer Reinseite austauschbar angeordneten Filterelement zum Filtern des Fluids, mit wenigstens einem Filterbalg mit einem zickzackförmig gefalteten Filtermedium, mit einer rohseitigen Anströmfläche, die durch die rohseitigen Faltkanten gebildet ist, und einer reinseitigen Abströmfläche, die durch die reinseitigen Faltkanten gebildet ist, welcher Filterbalg in einem reinseitig angeordneten Verstärkungsrahmen angeordnet ist, und mit wenigstens einer Dichtung, welche umfangsmäßig wenigstens teilweise zusammenhängend wenigstens abschnittsweise an einer äußeren Umfangsseite des Filtermediums auf der Anströmfläche oder auf der Abströmfläche des Filterbalgs angeordnet ist und welche mittels wenigstens teilweise umfangmäßig umlaufender Verzahnungsrippen mit dem Verstärkungsrahmen verbunden, insbesondere durch Anschäumen oder Anspritzen mit dem Verstärkungsrahmen verbunden ist. Dabei sind auf der Anströmfläche und/oder auf der Abströmfläche des Filterbalgs eine Mehrzahl von länglichen Klebstoffabschnitten entlang von mindestens zwei Klebstoffspuren auf dem Filtermedium angeordnet.

Erfindungsgemäß weist das Filterelement zugentlastende Mittel zur Kompensation einer Längenänderung der Klebstoffspuren gegenüber dem Filtermedium und/oder der Dichtung auf.

Der Filterbalg kann beispielsweise zickzackförmig zu Falten gefaltet sein, mit parallelen, in einer Längserstreckung des Filterbalgs aufeinander folgenden Faltkanten, die sich jeweils zwischen gegenüberliegenden Stirnkanten des Filterbalgs erstrecken. Dabei kann der Filterbalg umlaufend mit einem durchgehenden Verstärkungsrahmen umspritzt sein. Ein solcher Filterbalg ist vorteilhaft als Luftfilter, beispielsweise einer Brennkraftmaschine, einzusetzen und stellt eine kostengünstige und effiziente Lösung eines Luftfilters dar. Durch den angespritzten Rahmen lässt sich der Filterbalg einfach montieren und im Bedarfsfall auch austauschen.

Die Dichtung kann bevorzugt eine Polyurethan (PUR)-Dichtung sein, welche durch Anschäumen oder Anspritzen an den Filterbalg im Bereich des Verstärkungsrahmens hergestellt werden kann.

Die Durchströmungsrichtung ist bei einem flachen Filter beispielsweise senkrecht zur Anströmfläche und Abströmfläche, die bei einem flachen Filter an gegenüberliegenden Flachseiten des Filterbalgs vorgesehen sind, gerichtet. Vorzugsweise bilden die Abströmfläche und die Anströmfläche bei einem Filter mit aufgestellten Falten die Flächen, in denen jeweils die Faltkanten von Falten des Filtermediums liegen.

Eine der Durchströmseiten des Filterbalgs kann eine Anströmfläche für das Fluid, die andere Durchströmseite eine Abströmfläche realisieren. Das Fluid durchströmt den Filterbalg von der Anströmfläche zur Abströmfläche. Die Durchströmseiten können jeweils als Durchströmfläche realisiert sein, wobei bei einem gefalteten Filterbalg die jeweiligen Faltkanten die entsprechende Durchströmfläche aufspannen.

Gemäß dem Stand der Technik sind üblicherweise stirnseitig angeordnete Klebstoffabschnitte als über die Anströmfläche oder Abströmfläche durchgehende Klebstoffspuren auf den Faltkanten der Falten des Filtermediums angeordnet. Durch die erfindungsgemäßen zugentlastenden Mittel kann vorteilhaft vermieden werden, dass die Klebstoffspuren durch Schrumpfen des Klebstoffs im Lauf der Zeit Klebstofföffnungen aufweisen, was dann zu Leckagen für das zu reinigende Fluid zwischen der Dichtung und dem Filtermedium führen kann. Der Vorteil der zugentlastenden Mittel besteht darin, dass es durch das Schrumpfen des Klebstoffs nicht mehr zu relativ breiten Ablöseerscheinungen im kritischen Anbindungsbereich des Filterbalgs zur Dichtung kommt. Die Schrumpfung des Klebstoffs kann dennoch stattfinden, sodass es nicht zu entsprechenden Spannungen in diesen Bereichen kommt.

Gemäß einer vorteilhaften Ausgestaltung kann in dem Filtergehäuse fluidstromaufwärts vor dem Filterelement ein Zyklonvorabscheider vorgesehen sein und/oder wobei fluidstromabwärts nach dem Filterelement ein Sicherheitselement vorgesehen sein kann.

Vorteilhafterweise kann der Filter als Mehrstufenfilter, insbesondere zwei Stufen-Kompaktluftfilter, ausgestaltet sein. Vorteilhafterweise kann wenigstens ein Filterelement strömungstechnisch im Anschluss an wenigstens eine Partikelabscheideeinrichtung, insbesondere einen Zyklonvorabscheider, angeordnet sein. Die wenigstens eine Partikelabscheideeinrichtung kann Teil des Filters oder extern diesem insbesondere als Vorabscheider vorgeschaltet sein. Ein externer Vorabscheider kann außerhalb eines Motorraums angeordnet sein. Vorteilhafterweise können wenigstens eine Einlassöffnung, wenigstens ein Auslassöffnung und gegebenenfalls eine Partikelabscheideeinrichtung im Wesentlichen linear angeordnet sein. Auf diese Weise kann das Fluid dem Filter entsprechend im Wesentlichen entlang insbesondere einer Gehäuseachse des Filtergehäuses durchströmen.

Gemäß einer vorteilhaften Ausgestaltung kann mittels der Dichtung des Filterelements bei bestimmungsgemäß eingebautem Filterelement die Rohseite von der Reinseite getrennt sein. Auf diese Weise kann eine zuverlässige Reinigung des einströmenden Fluids bei hoher Standzeit des Filterelements gewährleistet werden.

Gemäß einer vorteilhaften Ausgestaltung kann das Filterelement als Einschubfilterelement ausgebildet sein, das quer zur Hauptströmungsachse des Fluids in das Filtergehäuse eingeführt oder einführbar ist. Dadurch ist ein zweckmäßiger Tausch des Filterelements bei erfolgter Beladung möglich. Auch kann so die Zeitdauer eines Wartungsaufenthalts mit Stillstand der Brennkraftmaschine oder des Fahrzeugs reduziert werden.

Das beschriebene Filtersystem kann vorteilhaft als Luftfilter, insbesondere als Luftfilter einer Brennkraftmaschine oder als Innenraumluftfilter, insbesondere eines Kraftfahrzeugs eingesetzt werden.

Die Erfindung kann bei Kraftfahrzeugen, Bau-/Landmaschinen, Kompressoren, Industriemotoren oder sonstigen Gerät mit Verbrennungsmotoren eingesetzt werden. Fahrzeuge im Sinne der Erfindung können Landfahrzeuge, Wasserfahrzeuge und/oder Luftfahrzeuge sein.

Vorteilhafterweise kann das Kraftfahrzeug ein Personenkraftwagen, ein Lastkraftwagen, ein Kraftrad, ein Kraftomnibus, eine Zugmaschine, ein landwirtschaftliches Fahrzeug und/oder ein Baufahrzeug oder dergleichen sein.

Die Erfindung kann vorteilhafterweise Teil eines Luftansaugtrakts einer Brennkraftmaschine sein. Der Filter kann zur Reinigung von Verbrennungsluft dienen, welche der Brennkraftmaschine zugeführt wird. Die Erfindung ist jedoch nicht beschränkt auf einen Luftfilter eines Luftansaugtrakts einer Brennkraftmaschine eines Kraftfahrzeugs. Vielmehr kann sie auch bei andersartigen Luftsystemen von Kraftfahrzeugen oder anderen Maschinen, insbesondere Landmaschinen oder Baumaschinen, verwendet werden. Der Luftfilter kann auch außerhalb der Kraftfahrzeugtechnik, insbesondere bei Industriemotoren, eingesetzt werden.

Im Übrigen gelten die im Zusammenhang mit dem erfindungsgemäßen Filterelement, dem erfindungsgemäßen Elementrahmen, dem erfindungsgemäßen Filterbalg, dem erfindungsgemäßen Filtergehäuse und dem erfindungsgemäßen Filter und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine isometrische Darstellung eines Filtersystems mit montiertem Filterelement nach einem Ausführungsbeispiel der Erfindung;
- Fig. 2: eine längsgeschnittene isometrische Darstellung des Filtersystems nach Figur 1;
- Fig. 3: eine isometrische Darstellung eines Filterelements nach einem Ausführungsbeispiel der Erfindung;
- Fig. 4: eine Draufsicht auf eine Abströmfläche des Filterelements nach Figur 3;
- Fig. 5: einen vergrößerten Ausschnitt aus der Draufsicht auf die Abströmfläche des Filterelements nach Figur 4;
- Fig. 6: eine isometrische Darstellung eines Filterelements nach einem weiteren Ausführungsbeispiel der Erfindung;
- Fig. 7: eine isometrische Ansicht eines Verstärkungsrahmens mit einer Dichtungs-Abstützvorrichtung des Filterelements nach Figur 6; und
- Fig. 8: einen vergrößerten Ausschnitt aus der isometrischen Darstellung des Filterelements nach Figur 6.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

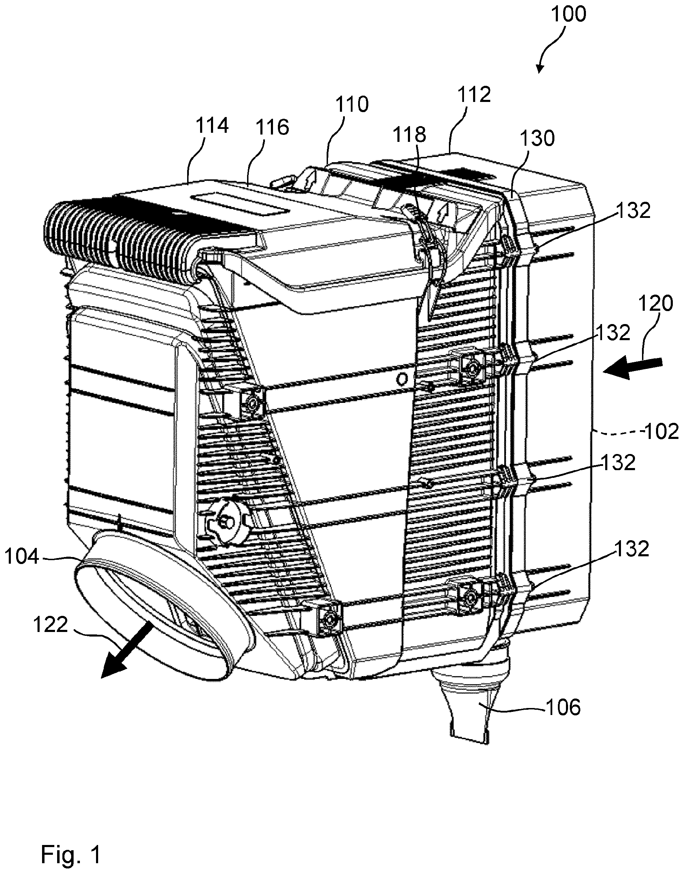

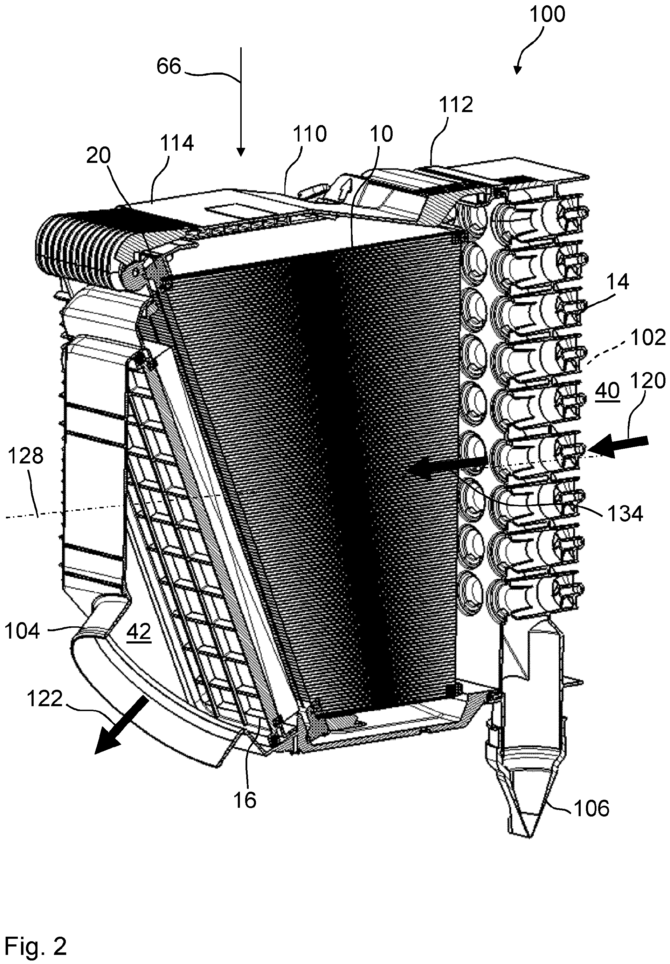

Figur 1 zeigt eine isometrische Darstellung eines Filtersystems 100 zum Filtern eines Fluids mit montiertem Filterelement 10 nach einem Ausführungsbeispiel der Erfindung, während in Figur 2 zum besseren Verständnis eine längsgeschnittene isometrische Darstellung des Filtersystems 100 dargestellt ist.

Das Filtersystem 100 weist ein Filtergehäuse 110 auf, welches wenigstens einen (nicht sichtbaren) Einlass 102 zum Einströmen des Fluidstroms 120 und wenigstens einen Auslass 104 zum Ausströmen des gereinigten Fluidstroms 122 aufweist. Das Filtergehäuse 110 umfasst ein Gehäuseunterteil 114 und ein Gehäuseoberteil 112, welche entlang eines Flansches 130 mittels Verschraubungen 132 zusammengefügt sind. In dem Filtergehäuse 110 ist zwischen einer Rohseite 40 und einer Reinseite 42 ein Filterelement 10 zum Filtern des Fluids austauschbar angeordnet. Das Filterelement 10 kann über einen Gehäusedeckel 116, welcher mittels Spannverschlüssen 118 mit dem Filtergehäuse 110 dicht verschlossen werden kann, in das Filtergehäuse 110 eingesetzt und wieder entnommen werden. Die Einströmrichtung des zu reinigenden Fluids, sowie die Ausströmrichtung sind mit Pfeilen 120, 122 angegeben.

Im Längsschnitt des Filtersystems 100 in Figur 2 ist das ebenfalls geschnittene Filterelement 10 zu erkennen, welches in das Filtergehäuse 110 eingesetzt ist. Weiter ist ein Zyklonvorabscheider 14 zu erkennen, wo gröbere Schmutzpartikel aus dem Fluidstrom ausgefiltert werden können. Die abgeschiedenen Schmutzpartikel können über den Schmutzauslass 106 aus dem Filtergehäuse abgelassen werden. Die Durchströmungsrichtung 134 des Filterelements 10 ist mit einem Pfeil angezeigt. Stromabwärts, bevor das gereinigte Fluid das Filtergehäuse 110 über den Auslass 104 verlassen kann, durchströmt das Fluid noch ein Sicherheitselement 16, welches beispielsweise als Flachbalg ausgebildet sein kann, um auch beim Tausch des Filterelements 10 die Reinseite 42 vor einer möglichen Verschmutzung durch Einströmen nicht gereinigten Fluids oder sonstiger Schmutzpartikel zu schützen. Das Sicherheitselement 16 deckt den Auslass 104 vollständig ab.

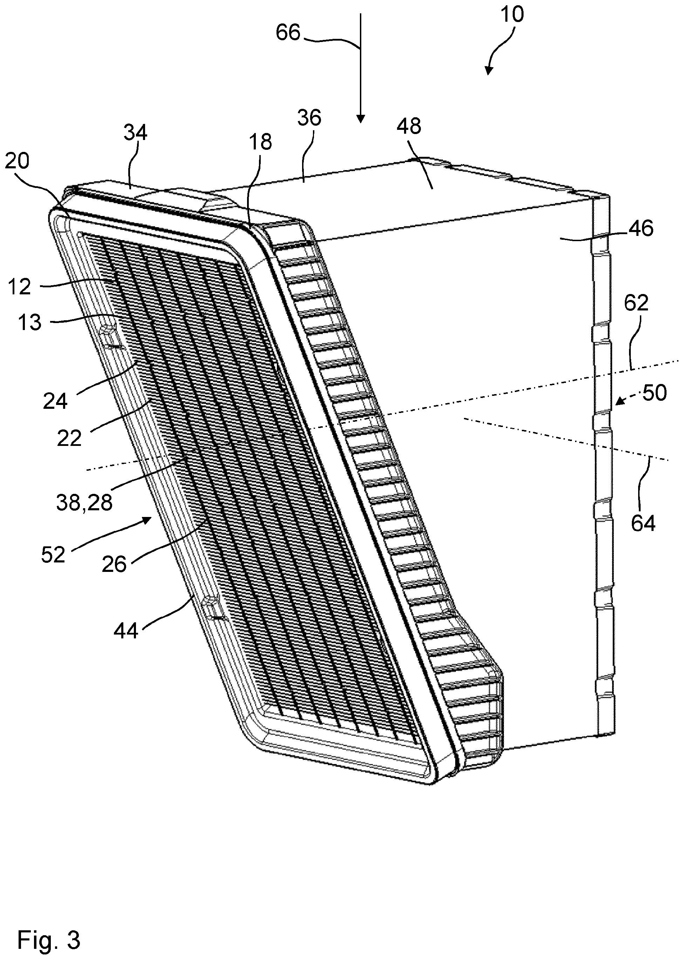

Das in dem Filtersystem 100, wie in den Figuren 1 und 2 dargestellt, eingesetzte Filterelement 10 ist in Figur 3 in einer isometrischen Darstellung zu sehen. Das Filterelement 10 umfasst einen Filterbalg 12, welcher in einem Elementrahmen 36 eingesteckt ist.

Das Filterelement 10 ist als Einschubfilterelement ausgebildet, das quer zur Hauptströmungsachse 128 (siehe Figur 2) des Fluids in das Filtergehäuse 110 eingeführt oder einführbar ist.

Der Filterbalg 12 verfügt über ein zickzackförmig gefaltetes Filtermedium 13. Der Filterbalg 12 ist in Richtung einer Hauptachse 62 betrachtet rechteckig. In Richtung einer Querachse 64 betrachtet hat der Filterbalg 12 etwa die Form eines rechtwinkligen Trapezes. Eine rohseitige Anströmfläche 50 des Filterbalgs 12 verläuft parallel zu einer Durchströmmittelebene, also senkrecht zur Hauptachse 62. Eine reinseitige Abströmfläche 52 verläuft parallel zur Querachse 64 und schräg zur Durchströmmittelebene, also schräg zur Anströmfläche 50.

Der Filterbalg 12 verjüngt sich in Einbaurichtung 66 betrachtet zu seiner vorderen Querseite hin. Die Faltkanten 24 des Filtermediums 13 an der Anströmfläche 50 und der Abströmfläche 52 verlaufen jeweils parallel zur Querachse 64. Die Faltkanten 24 spannen jeweils die Anströmfläche 50 bzw. die Abströmfläche 52 auf. Die Höhen der Falten 22 des gefalteten Filtermediums 13 in Richtung der Hauptachse 62 verkleinert sich von der bezüglich der Einbaurichtung 66 hinteren Querseite des Filterbalgs 12 zu dessen vorderer Querseite hin. Der Filterbalg 12 hat also variable Faltenhöhen.

Die Abströmfläche 52 ist von der Dichtung 20 umgeben. Mittels der Dichtung 20 des Filterelements 10 ist bei bestimmungsgemäß eingebautem Filterelement 10 die Rohseite 40 von der Reinseite 42 des Filterelements 10 getrennt.

Die Dichtung 20 ist aus Polyurethan. Sie ist elastisch. Die Dichtung 20 ist an der Stirnseite des Filtermediums 13 angeschäumt. Die Dichtung 20 überragt das Filtermedium 13 bezüglich der Hauptachse 62 radial außen und in axialer Richtung. Eine ausströmseitige stirnseitige Dichtlippe der Dichtung 20 bildet eine bezüglich der Hauptachse 62 umfangsmäßig zusammenhängende Dichtungsfläche 44. Die Dichtungsfläche 44 liegt im eingebauten Zustand an einer gehäuseseitigen Dichtfläche an.

Auf der der Dichtungsfläche 44 bezüglich der Hauptachse 62 axial abgewandten Rückseite der Dichtung 20 ist ein Verstärkungsrahmen 18 aus Kunststoff in die Dichtungsspur der Dichtung 20 eingebettet. Der Verstärkungsrahmen 100 erstreckt sich parallel zur Dichtebene und parallel zur Dichtungsfläche 44. Der Verstärkungsrahmen 18 ist bezüglich der Hauptachse 62 umfangsmäßig zusammenhängend. Eine der Dichtungsfläche 44 bezüglich der Hauptachse 62 axial abgewandte Dichtungsrückseite der Dichtung 20 erstreckt sich in einer Ebene parallel zur Ebene der Dichtungsfläche 44. Bei eingebautem Filterelement 14 erstrecken sich die jeweiligen Ebenen der Dichtungsfläche 44 und der Dichtungsrückseite parallel zur Dichtebene der gehäuseseitigen Dichtfläche.

Auf der Abströmfläche 52 verfügt der Elementrahmen 36 über die Dichtungs-Abstützvorrichtung 34. Die Dichtungs-Abstützvorrichtung 34 ist am abströmseitigen Rand des Elementrahmens 36 angeordnet. Die Dichtungs-Abstützvorrichtung 34 erstreckt sich an der Außenseite des Filterelements 10 bezüglich der Hauptachse 62 umfangsmäßig zusammenhängend. Die Dichtungs-Abstützvorrichtung 34 ist einstückig mit den Längswänden 46 und den Querwänden 48 des Elementrahmens 36 verbunden.

Auf der Anströmfläche 50 und/oder auf der (nicht sichtbaren) Abströmfläche 52 des Filterbalgs 12 sind eine Mehrzahl von länglichen Klebstoffabschnitten 28 entlang von mindestens zwei Klebstoffspuren 26 auf dem Filtermedium 13 angeordnet, um die Falten 22 des Filtermediums 13 mechanisch gegen den Fluiddruck des strömenden Fluids zu stabilisieren.

Aus Gründen der Übersichtlichkeit ist in Figur 3 und den folgenden Figuren jeweils nur eine Klebstoffspur 26 mit Bezugszeichen versehen.

Zur Kompensation einer Längenänderung der Klebstoffspuren 26 gegenüber dem Filtermedium 13 und/oder der Dichtung 20 weist das Filterelement 10 erfindungsgemäß zugentlastende Mittel 38 auf.

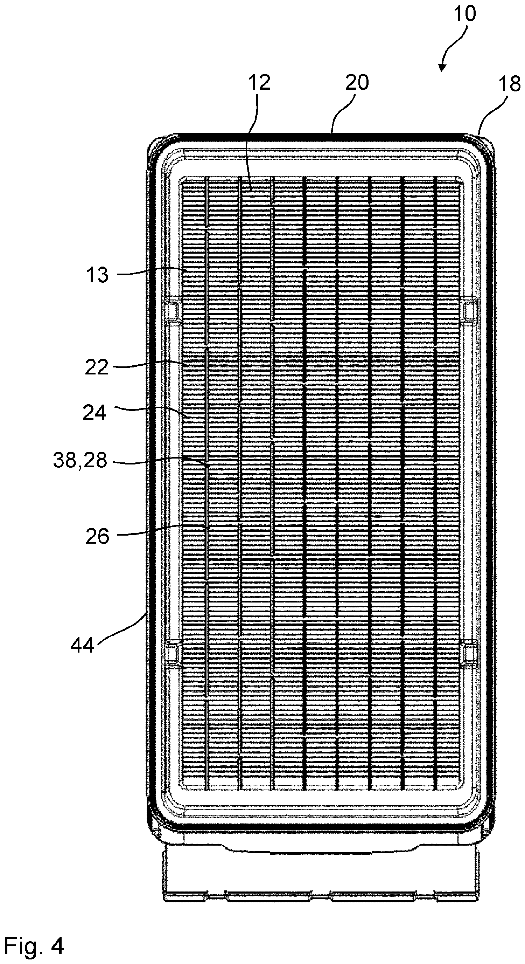

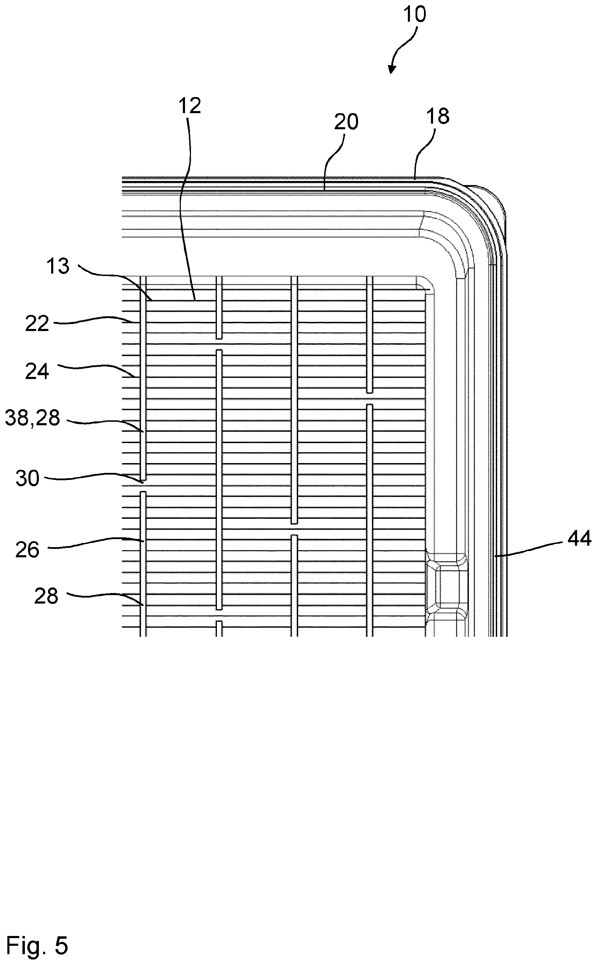

Figur 4 zeigt dazu eine Draufsicht auf die Abströmfläche 52 des Filterelements 10 nach Figur 3, während in Figur 5 ein vergrößerter Ausschnitt aus der Draufsicht auf die Abströmfläche 52 dargestellt ist.

In dem in den Figuren 3 bis 5 dargestellten ersten Ausführungsbeispiel ist als zugentlastendes Mittel 38 auf jeder Klebstoffspur 26 wenigstens ein Klebstoffabschnitt 28 und wenigstens eine Klebstoffunterbrechung 30 angeordnet, wobei insbesondere die Klebstoffunterbrechungen 30 benachbarter Klebstoffspuren 26 bezüglich einer Querrichtung zu den Falten 22 auf unterschiedlichen Faltkanten 24 angeordnet sind.

Wie insbesondere in Figur 5 zu erkennen ist, sind die Klebstoffunterbrechungen 30 benachbarter Klebstoffspuren 26 ohne Überlappung bezüglich einer Querrichtung zu den Falten 22 angeordnet. Die ununterbrochenen Klebstoffabschnitte 28 können sich dabei vorteilhaft über mindestens fünfmal, bevorzugt über mindestens zehnmal, besonders bevorzugt über mindestens fünfzehnmal, mehr Falten 22 als die Klebstoffunterbrechungen 30 erstrecken. Die Klebstoffunterbrechungen 30 können sich über eine Faltkante 24 hinweg erstrecken, und bevorzugt sich über eine Falte 22 erstrecken.

Die Klebstoffspuren 26 sind parallel zueinander äquidistant angeordnet und die verlaufen senkrecht zu den Faltkanten 28. Die Klebstoffunterbrechungen 30 sind über die Abströmfläche 52 im Wesentlichen gleichmäßig verteilt angeordnet.

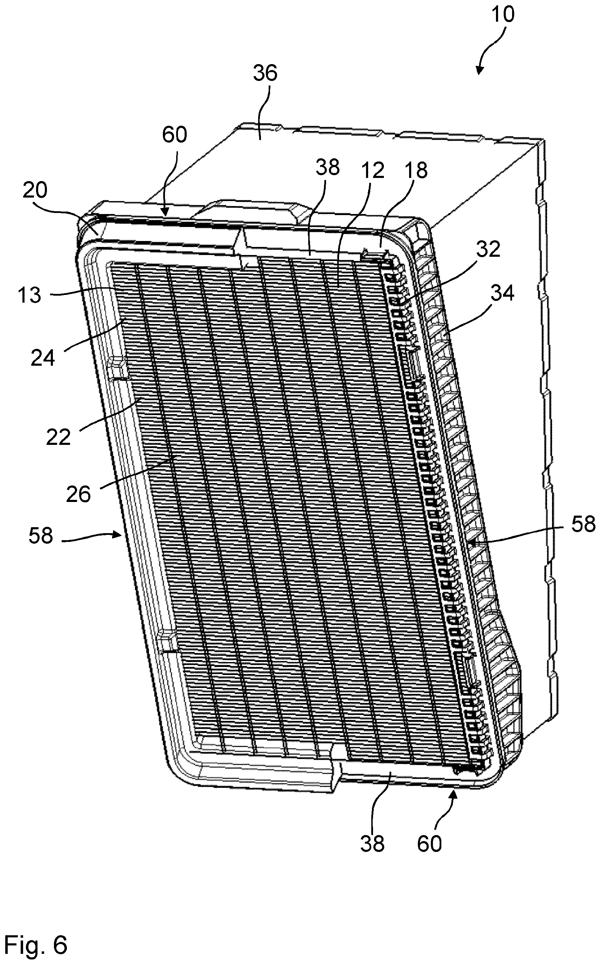

In Figur 6 ist eine isometrische Darstellung eines Filterelements 10 nach einem weiteren Ausführungsbeispiel der Erfindung dargestellt, bei dem als zugentlastendes Mittel 38 auf wenigstens einer Querseite 60 des Verstärkungsrahmens 18, welche senkrecht zu den Klebstoffspuren 26 ausgerichtet ist, ein Schiebesitz der Dichtung 20 vorgesehen ist. Die Dichtung 20 ist teilweise geschnitten und somit nur auf einer Seite der Abströmfläche 52 des Filterelements 10 dargestellt. Dabei sind bei dem Verstärkungsrahmen 18, welcher Verzahnungsrippen 32 aufweist, die Querseiten 60 des Verstärkungsrahmens 18 verzahnungsrippenlos ausgebildet ist. Da die Dichtung 20 an diesen Querseiten 60 nicht mit Verzahnungsrippen 32 und damit mit dem Verstärkungsrahmen durch Anschäumen fest verbunden ist, ist die Dichtung 20 auf den Querseiten 60 dadurch verschieblich angeordnet und kann auf dem Verstärkungsrahmen 18 gleiten. Damit kann sich die Dichtung 20 bei Bewegungen des Filtermediums 13 auf Grund von Schrumpfung der Klebspuren 26 relativ zu den Querseiten 60 des Verzahnungsrahmens 18 bewegen. Auf diese Weise können Klebstofföffnungen zwischen Filtermedium 13 und Dichtung 20, welche zu Leckagen für das zu filternde Fluid führen können, vermieden werden. Die Dichtigkeit zwischen dem Filtermedium 13 und der Dichtung 20 kann so über die Standzeit des Filterelements 10 gewährleistet werden.

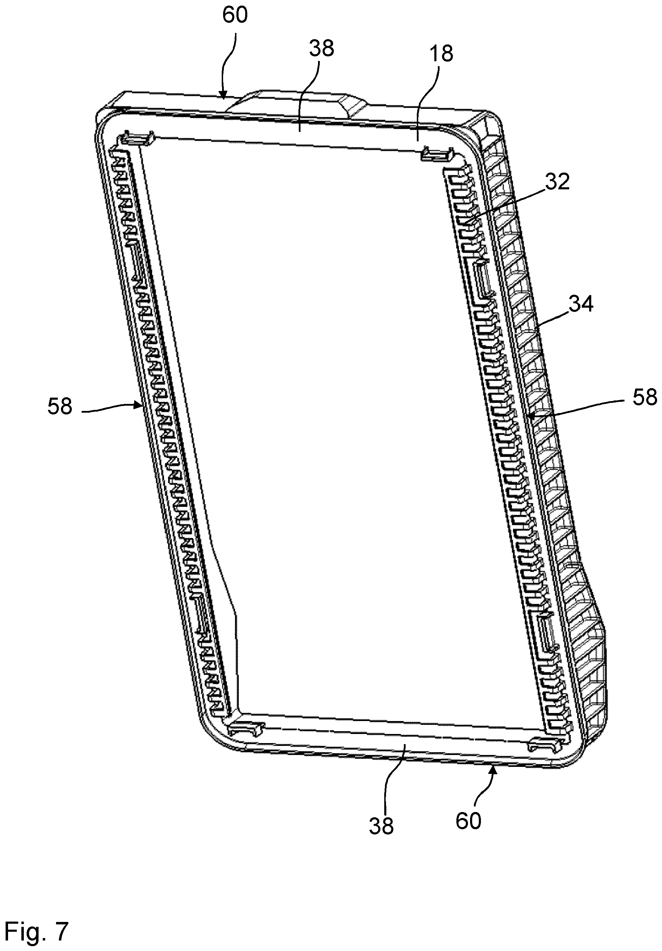

Figur 7 zeigt dazu eine isometrische Ansicht eines Verstärkungsrahmens 18, welcher an der Dichtungs-Abstützvorrichtung 34 des Filterelements 10 anliegt. Wie erkennbar, weisen die Querseiten 60 des Verstärkungsrahmens 18 keine Verzahnungsrippen 32 auf, sodass die Dichtung 20 des Filterbalgs 12 darauf verschoben werden kann.

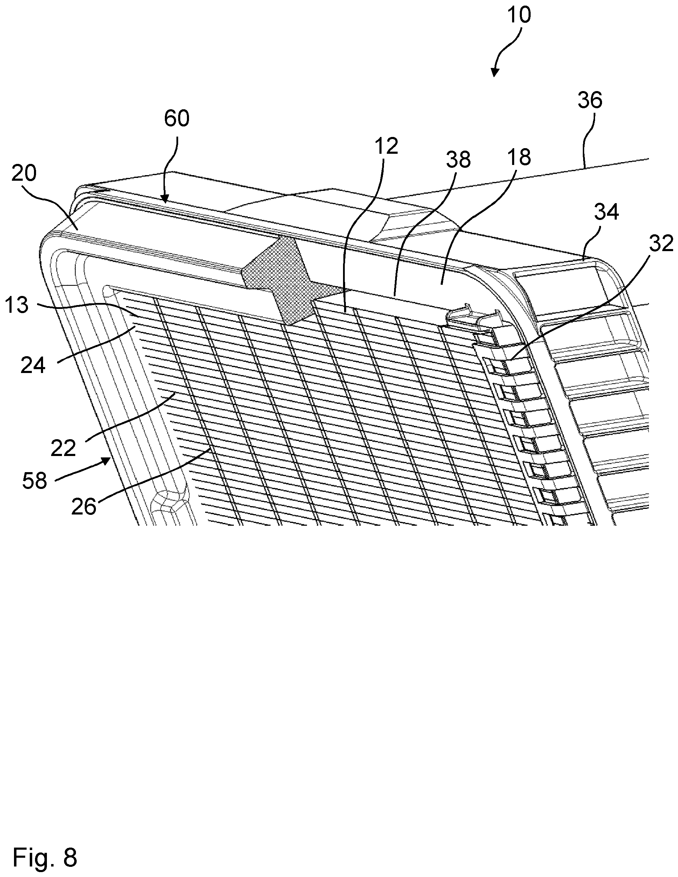

Figur 8 zeigt einen vergrößerten Ausschnitt aus der isometrischen Darstellung des Filterelements 10 nach Figur 6. Dabei ist die Dichtung 20 teilweise geschnitten und somit nur auf einer Seite der Abströmfläche 52 des Filterelements 10 dargestellt, sodass die fehlenden Verzahnungsrippen 32 auf den Querseiten 60 des Verstärkungsrahmens 18 erkennbar sind.

In einem alternativen Ausführungsbeispiel kann das zugentlastende Mittel 38 der fehlenden Verzahnungsrippen 32 auch auf wenigstens einer Längsseite 58, welche schräg oder senkrecht zu den Klebstoffspuren 26 ausgerichtet ist, vorgesehen sein.

## Patentansprüche

1. Filterelement (10) zum Filtern eines Fluids, insbesondere Luft, mit wenigstens einem Filterbalg (12) mit einem zickzackförmig gefalteten Filtermedium (13), mit einer rohseitigen Anströmfläche (50) und einer reinseitigen Abströmfläche (52), wobei der Filterbalg (12) in einem Rahmen (18) angeordnet ist,
mit wenigstens einer Dichtung (20), welche umfangsmäßig wenigstens teilweise zusammenhängend wenigstens abschnittsweise an einer äußeren Umfangsseite des Filtermediums (13) und/oder auf der Anströmfläche (50) oder an und/oder auf der Abströmfläche (52) des Filterbalgs (12) angeordnet und durch Angießen, Anschäumen oder Anspritzen dichtend mit dem Filterbalg (12) verbunden ist, und, wobei auf der Anströmfläche (50) und/oder auf der Abströmfläche (52) des Filterbalgs (12) eine Mehrzahl von länglichen Klebstoffabschnitten (28) entlang von mindestens zwei Klebstoffspuren (26) auf dem Filtermedium (13) angeordnet sind, **dadurch gekennzeichnet, dass** das Filterelement (10) zugentlastende Mittel (38) zur Kompensation einer Längenänderung der Klebstoffspuren (26) gegenüber dem Filtermedium (13) und/oder der Dichtung (20) aufweist, wobei die Dichtung (20) mittels Formschlusselementen durch Angießen, Anschäumen oder Anspritzen mit dem Verstärkungsrahmen (18) verbunden ist, wobei als zugentlastendes Mittel (38) auf wenigstens einer Längsseite (58) und/oder einer Querseite (60) des Verstärkungsrahmens (18), welche Längsseite (58) und/oder Querseite (60) schräg oder senkrecht zu den Klebstoffspuren (26) ausgerichtet ist, ein Schiebesitz der Dichtung (20) vorgesehen ist, bei welchem an wenigstens einer Längsseite oder Querseite des Verstärkungsrahmens die Formschlusselementen weggelassen sind.

2. Filterelement nach Anspruch 1, wobei der Filterbalg (12) an der rohseitigen Anströmfläche (50) und/oder an der reinseitigen Abströmfläche (52) mit dem Rahmen (18) verbunden ist.

3. Filterelement nach einem der vorhergehenden Ansprüche, wobei die Dichtung (20) mittels als wenigstens teilweise umfangmäßig umlaufender Verzahnungsrippen (32) ausgeführten Formschlusselementen des Verstärkungsrahmens (18) mit dem Verstärkungsrahmen (18) verbunden ist.

4. Filterelement nach einem der vorhergehenden Ansprüche, wobei als zugentlastendes Mittel (38) auf jeder Klebstoffspur (26) wenigstens ein Klebstoffabschnitt (28) und wenigstens eine Klebstoffunterbrechung (30) angeordnet ist, wobei insbesondere die Klebstoffunterbrechungen (30) benachbarter Klebstoffspuren (26) bezüglich einer Querrichtung zu den Falten (22) auf unterschiedlichen Faltkanten (24) angeordnet sind.

5. Filterelement nach Anspruch 4, wobei die Klebstoffunterbrechungen (30) benachbarter Klebstoffspuren (26) ohne Überlappung bezüglich einer Querrichtung zu den Falten (22) angeordnet sind.

6. Filterelement nach Anspruch 4 oder 5, wobei sich die ununterbrochenen Klebstoffabschnitte (28) über mindestens fünfmal, bevorzugt über mindestens zehnmal, besonders bevorzugt über mindestens fünfzehnmal, mehr Falten (22) erstrecken als die Klebstoffunterbrechungen (30).

7. Filterelement nach einem der Ansprüche 4 bis 6, wobei sich die Klebstoffunterbrechungen (30) über eine Faltkante (24) hinweg erstrecken, bevorzugt sich über eine Falte (22) erstrecken.

8. Filterelement nach einem der vorhergehenden Ansprüche, wobei die Klebstoffspuren (26) parallel zueinander und bevorzugt äquidistant angeordnet sind und/oder wobei die Klebstoffunterbrechungen (30) über die Anströmfläche (50) und/oder über die Abströmfläche (52) gleichmäßig verteilt angeordnet sind.

9. Filterelement nach einem der vorherigen Ansprüche, wobei die Klebstoffspuren (26) senkrecht zu den Faltkanten (28) verlaufen.

10. Filterelement nach einem der vorhergehenden Ansprüche, wobei der Verstärkungsrahmen (18) Verzahnungsrippen (32) aufweist und wenigstens eine Längsseite (58) oder eine Querseite (60) des Verstärkungsrahmens (18) verzahnungsrippenlos ausgebildet ist.

11. Filterelement nach Anspruch 10, wobei die Dichtung (20) auf der Längsseite (58) oder der Querseite (60) verschieblich angeordnet ist.

12. Filtersystem (100) zum Filtern eines Fluids mit einem Filtergehäuse (110), welches wenigstens einen Einlass (102) zum Einströmen des Fluidstroms (120) und wenigstens einen Auslass (104) zum Ausströmen des gereinigten Fluidstroms (122) aufweist,
und mit einem in dem Filtergehäuse (110) zwischen einer Rohseite (40) und einer Reinseite (42) austauschbar angeordneten Filterelement (10) zum Filtern des Fluids nach einem der vorhergehenden Ansprüche.

13. Filtersystem nach Anspruch 12, wobei mittels der Dichtung (20) des Filterelements (10) bei bestimmungsgemäß eingebautem Filterelement (10) die Rohseite (40) von der Reinseite (42) getrennt ist.

14. Filtersystem nach einem der Ansprüche 12 bis 13, wobei das Filterelement (10) als Einschubfilterelement ausgebildet ist, das quer zur Hauptströmungsachse (128) des Fluids in das Filtergehäuse (110) eingeführt oder einführbar ist.

## Claims

1. Filter element (10) for filtering a fluid, in particular air, having at least one filter bellows (12) with a zigzag-folded filter medium (13), having a raw-side inflow surface (50) and a clean-side outflow surface (52),
wherein the filter bellows (12) is disposed in a frame (18), having at least one seal (20) which is circumferentially disposed at least partially contiguously at least sectionwise at an exterior circumferential side of the filter medium (13) and/or on the inflow surface (50) or at and/or on the outflow surface (52) of the filter bellows (12) and is sealingly connected to the filter bellows (12) by casting, foaming or injection molding, and
wherein a plurality of elongated adhesive sections (28) are disposed along at least two adhesive lines (26) on the filter medium (13) on the inflow surface (50) and/or on the outflow surface (52) of the filter bellows (12), **characterized in that** the filter element (10) features tension-relieving means (38) for compensating a change in length of the adhesive lines (26) with respect to the filter medium (13) and/or the seal (20), wherein the seal (20) is connected to the reinforcing frame (18) using form-fit elements thanks to casting, foaming or injection molding, wherein a tight fit of the seal (20) is provided as a tension-relieving means (38) on at least one longitudinal side (58) and/or one transverse side (60) of the reinforcing frame (18), said longitudinal side (58) and/or transverse side (60) being oriented obliquely or perpendicularly to the adhesive lines (26), wherein the form-fit elements are omitted on at least one longitudinal side or transverse side of the reinforcing frame.

2. Filter element according to claim 1, wherein the filter bellows (12) is connected to the frame (18) on the raw-side inflow surface (50) and/or on the clean-side outflow surface (52).

3. Filter element according to one of the preceding claims, wherein the seal (20) is connected to the reinforcing frame (18) using form-fit elements of the reinforcing frame (18) configured as at least partially circumferential toothed ribs (32).

4. Filter element according to one of the preceding claims, wherein at least one adhesive section (28) and at least one adhesive interruption (30) are disposed as tension-relieving means (38) on each adhesive line (26), wherein in particular the adhesive interruptions (30) of adjacent adhesive lines (26) are disposed on different fold edges (24) with respect to a transversal direction to the folds (22).

5. Filter element according to claim 4, wherein the adhesive interruptions (30) of adjacent adhesive lines (26) are disposed without overlapping with respect to a transversal direction to the folds (22).

6. Filter element according to claim 4 or 5, wherein the uninterrupted adhesive sections (28) extend across at least five times, preferably across at least ten times, particularly preferably across at least fifteen times, more folds (22) than the adhesive interruptions (30).

7. Filter element according to one of the claims 4 to 6, wherein the adhesive interruptions (30) extend across a fold edge (24), preferably extend across a fold (22).

8. Filter element according to one of the preceding claims, wherein the adhesive lines (26) are disposed parallel to one another and preferably equidistantly and/or wherein the adhesive interruptions (30) are disposed uniformly distributed across the inflow surface (50) and/or across the outflow surface (52).

9. Filter element according to one of the preceding claims, wherein the adhesive lines (26) extend perpendicularly to the fold edges (28).

10. Filter element according to one of the preceding claims, wherein the reinforcing frame (18) features toothed ribs (32) and at least one longitudinal side (58) or one transverse side (60) of the reinforcing frame (18) is designed without toothed ribs.

11. Filter element according to claim 10, wherein the seal (20) is slidably disposed on the longitudinal side (58) or the transverse side (60).

12. Filter system (100) for filtering a fluid having a filter housing (110), which features at least one inlet (102) for the inflow of the fluid stream (120) and at least one outlet (104) for the outflow of the purified fluid stream (122),
and having a filter element (10) replaceably disposed in the filter housing (110) between a raw side (40) and a clean side (42) for filtering the fluid according to one of the preceding claims.

13. Filter system according to claim 12, wherein the raw side (40) is separated from the clean side (42) using the seal (20) of the filter element (10) when the filter element (10) is installed as intended.

14. Filter system according to one of the claims 12 to 13, wherein the filter element (10) is designed as a slide-in filter element which is inserted or insertable into the filter housing (110) transversely to the main flow axis (128) of the fluid.

## Revendications

1. Élément filtrant (10) destiné à filtrer un fluide, notamment de l'air, ayant au moins un soufflet de filtre (12) avec un milieu filtrant (13) plié en accordéon, ayant une surface d'afflux (50) côté brut, et une surface d'écoulement (52) côté pur,
dans lequel le soufflet de filtre (12) est disposé dans un cadre (18), ayant au moins un joint d'étanchéité (20), qui est disposé de manière circonférentielle au moins partiellement cohérente au moins par sections contre un côté circonférentiel extérieur du milieu filtrant (13) et/ou sur la surface d'afflux (50) ou contre et/ou sur la surface d'écoulement (52) du soufflet de filtre (12) et est raccordé de manière étanche au soufflet de filtre (12) par moulage, moussage ou injection, et
dans lequel, sur la surface d'afflux (50) et/ou sur la surface d'écoulement (52) du soufflet de filtre (12), une pluralité de sections adhésives allongées (28) sont disposées le long de deux traces d'adhésif (26) au moins sur le milieu filtrant (13), **caractérisé en ce que** l'élément filtrant (10) présente des moyens de détente de traction (38) pour compenser une modification de longueur des traces d'adhésif (26) par rapport au milieu filtrant (13) et/ou au joint d'étanchéité (20), dans lequel le joint d'étanchéité (20) est raccordé au cadre de renforcement (18) au moyen d'éléments à engagement positif par moulage, moussage ou injection, dans lequel il est prévu en tant que moyen de détente de traction (38) sur au moins un côté longitudinal (58) et/ou un côté transversal (60) du cadre de renforcement (18), lequel côté longitudinal (58) et/ou côté transversal (60) est orienté obliquement ou perpendiculairement aux traces d'adhésif (26), un ajustement appuyé du joint d'étanchéité (20), dans lequel, sur au moins un côté longitudinal ou un côté transversal du cadre de renforcement, les éléments à engagement positif sont omis.

2. Elément filtrant selon la revendication 1, dans lequel le soufflet de filtre (12) est raccordé au cadre (18) au niveau de la surface d'afflux (50) du côté brut et/ou au niveau de la surface d'écoulement (52) du côté pur.

3. Élément filtrant selon l'une quelconque des revendications précédentes, dans lequel le joint d'étanchéité (20) est raccordé au cadre de renforcement (18) au moyen d'éléments à engagement positif du cadre de renforcement (18) réalisés sous la forme de nervures d'engrenage (32) s'étendant au moins partiellement sur la circonférence.

4. Elément filtrant selon l'une quelconque des revendications précédentes, dans lequel sont disposées en tant que moyen de détente de traction (38) sur chaque trace d'adhésif (26) au moins une section d'adhésif (28) et au moins une interruption d'adhésif (30), dans lequel notamment les interruptions d'adhésif (30) de traces d'adhésif (26) voisines sont disposées sur des arêtes de pliage (24) différentes par rapport à une direction transversale aux plis (22).

5. Élément filtrant selon la revendication 4, dans lequel les interruptions d'adhésif (30) de traces d'adhésif voisines (26) sont disposées sans chevauchement par rapport à une direction transversale aux plis (22).

6. Elément filtrant selon la revendication 4 ou 5, dans lequel les sections d'adhésif (28) ininterrompues s'étendent sur au moins cinq fois, de préférence sur au moins dix fois, de façon particulièrement préférée sur au moins quinze fois, plus de plis (22) que les interruptions d'adhésif (30).

7. Élément filtrant selon l'une quelconque des revendications 4 à 6, dans lequel les interruptions d'adhésif (30) s'étendent au-delà d'une arête de pliage (24), de façon particulièrement préférée s'étendent au-delà d'un pli (22).

8. Élément filtrant selon l'une quelconque des revendications précédentes, dans lequel les traces d'adhésif (26) sont disposées parallèlement les unes aux autres et de préférence de manière équidistantes et/ou dans lequel les interruptions d'adhésif (30) sont distribuées uniformément sur la surface d'afflux (50) et/ou sur la surface d'écoulement (52).

9. Élément filtrant selon l'une quelconque des revendications précédentes, dans lequel les traces d'adhésif (26) s'étendent perpendiculairement aux arêtes de pliage (28).

10. Élément filtrant selon l'une quelconque des revendications précédentes, dans lequel le cadre de renforcement (18) présente des nervures d'engrenage (32) et au moins un côté longitudinal (58) ou un côté transversal (60) du cadre de renforcement (18) est conçu sans nervures d'engrenage.

11. Élément filtrant selon la revendication 10, dans lequel le joint (20) est disposé de manière déplaçable sur le côté longitudinal (58) ou le côté transversal (60).

12. Système de filtre (100) destiné à filtrer un fluide ayant un boîtier de filtre (110) qui présente au moins une entrée (102) pour une admission du flux de fluide (120) et au moins une sortie (104) pour une évacuation du flux de fluide purifié (122),
et ayant un élément filtrant (10) disposé de manière échangeable dans le boîtier de filtre (110) entre un côté brut (40) et un côté pur (42) pour filtrer le fluide selon l'une quelconque des revendications précédentes.

13. Système de filtre selon la revendication 12, dans lequel le côté brut (40) est séparé du côté pur (42) au moyen du joint d'étanchéité (20) de l'élément filtrant (10) si l'élément filtrant (10) est installé conformément à l'utilisation prévue.

14. Système de filtre selon l'une quelconque des revendications 12 à 13, dans lequel l'élément filtrant (10) est conçu en tant qu'élément de filtre insérable, qui est introduit ou peut être introduit dans le boîtier de filtre (110) transversalement à l'axe principal d'écoulement (128) du fluide.
